# EUROPEAN PATENT APPLICATION

(11) **EP 2 945 047 A1**
(43) Date of publication of application: **18.11.2015**
(21) Application number: 15166925.6
(22) Date of filing: 08.05.2015
(51) Int. Cl.: G06F 3/0484

(54) **OPERATING DEVICE AND OPTICAL DISK PLAYBACK DEVICE**

(30) Priority: 14.05.2014 JP 2014100489
(71) Applicant: Toshiba Alpine Automotive Technology Corporation, Iwaki- shi Fukushima 970-1144 (JP)
(72) Inventor: Yamaguchi, Shingo, Fukushima, 970-1144 (JP)
(74) Representative: Hoffmann Eitle

(57) **Abstract**

According to one embodiment, an operating device for receiving a selecting operation of a user of an image including a plurality of selection target images includes at least a detection region setting unit. The detection region setting unit sets a detection region for receiving the selection operation to a selection target image for each of the plurality of selection target images based on the information of a specific region. The detection region setting unit sets the detection region such that, for selection target images with specific regions of which are close to each other with an interval less than threshold distance, a region with a width reduced in an approaching direction at least for one of a plurality of close specific regions is set as a detection region of corresponding selection target image, and a region in the approaching direction between set detection regions is set as a nondetection region.

## Description

### FIELD

Embodiments described herein relate generally to an operating device and an optical disk playback device.

### BACKGROUND

In a case in which selection target images such as a plurality of buttons are displayed in a single image, a user might try to apply a selecting operation to one of such selection target images. In this case, if the plurality of selection target images is close to each other, the user might apply the selecting operation to an image to be selected different from the image to be selected desired by the user.

Thus, in the case in which the plurality of selection target images is displayed close to each other, various methods have been developed for preventing an erroneous operation by the user. A first method of such methods is such that, if a selecting operation is performed in a vicinity of a boundary between two buttons close to each other, for example, the selecting operation of the smaller button of the two buttons is received.

This is a method based on estimation that, if the desired selecting operation is for the larger button, the vicinity of a center of the larger button should be pressed instead of the vicinity of the boundary. Thus, the probability of reception of the selecting operation for the smaller button, whose selecting operation is considered to be more difficult than that of the larger button, can be improved.

A second method is such that a recognition region of the selecting operation to an operating button is shifted in accordance with a shift of a position pressed by the user onto a touch panel. According to the second method, even if a position deviated from the button is pressed, the selecting operation can be received, and the probability of reception of the selecting operation can be improved.

A third method is a method for improving the reception probability of the selecting operation by displaying a button image in an enlarged manner in accordance with approach if the approach of a finger of the user to the button on the touch panel or the like is detected.

However, in the first method, an intention of selection of the smaller button is one-sidedly estimated without confirming an actual intension of the user. Moreover, in the second method, even if a position deviated from the button is pressed, the selecting operation might be received. Thus, with the first and second methods, possibility of erroneous detection of the selecting operation not intended by the user becomes higher than a case in which these methods are not used.

If the selecting operation is erroneously detected, the user needs to take a labor such as pressing the "return" button or the like in order to display an original selection reception screen. Particularly if an operation associated with the button with which the selecting operation is erroneously detected requires complicated processing, it takes a lot of time to return to the original selection reception screen, which is very inconvenient.

Moreover, in the third method, determination of approach to the touch panel needs to be made, and a device more completed than a general touch panel is required.

### BRIEF DESCRIPTION OF THE DRAWINGS

The accompanying drawings, which are incorporated in and constitute a part of the specification, illustrate embodiments of the invention, and together with the general description given above and the detailed description of the embodiments given below, serve to explain the principles of the invention.
Fig. 1 is a block diagram illustrating an example of an optical disk playback device including an operating device according to an embodiment of the present invention;
Fig. 2 is an explanatory view illustrating an example of a movie menu image including a plurality of selection target images;
Fig. 3 is a view for explaining a specific region recorded in the optical disk 100;
Fig. 4A is an explanatory view illustrating an example of a relation between a detection region and the specific region according to this embodiment;
Fig. 4B is an explanatory view illustrating an example of a relation between a non-detection region and the detection region according to this embodiment;
Fig. 5A is an explanatory view illustrating an example in which a region width in a direction orthogonal to the approaching direction is maintained and the detection region is set from the specific region;
Fig. 5B is an explanatory view illustrating an example in which a position of an edge portion of the specific region without the specific region close to itself is maintained and the detection region is set in the example illustrated in Fig. 5A;
Fig. 5C is an explanatory view illustrating an example in which the detection regions are set from the specific regions having a plurality of approaching directions in the example illustrated in Fig. 5B;
Fig. 6 is an explanatory view illustrating an example of a state in which the width of the specific region is enlarged, and the detection region is set;
Fig. 7A is an explanatory view illustrating an example of the movie menu image when the detection region is set by applying the method illustrated in Figs. 5C and 6 to the specific region illustrated in Fig. 3;
Fig. 7B is an explanatory view illustrating an example when an input operation through a pointer image is performed to the movie menu image illustrated in Fig. 7A; and
Fig. 8 is a flowchart illustrating an example of a procedure of the operating device illustrated in Fig. 1 for setting the detection region and the non-detection region so that the selecting operation of the image to be selected, desired by the user can be reliably received while erroneous detection is reduced.

### DETAILED DESCRIPTION

Hereinbelow, a description will be given of an operating device and an optical disk playback device according to embodiments of the present invention with reference to the drawings.

In general, according to one embodiment, an operating device for receiving a selecting operation of a user of an image including a plurality of selection target images, the image being read from an optical disk, includes a specific region information obtaining unit, a detection region setting unit and an operation reception unit.

The specific region information obtaining unit obtains information of a specific region recorded in the optical disk for each of the plurality of selection target images.

The detection region setting unit sets a detection region for receiving the selection operation to a selection target image for each of the plurality of selection target images based on the information of the specific region. The detection region setting unit sets the detection region such that, for selection target images with specific regions of which are close to each other with an interval less than a first threshold distance, a region with a width reduced in an approaching direction at least for one of a plurality of close specific regions is set as a detection region of corresponding selection target image. The detection region setting unit also sets a region in the approaching direction between set detection regions as a non-detection region. Meanwhile for other selection target images the detection region setting unit sets a same region as the specific region as the detection region.

The operation reception unit receives the selecting operation of the user in the detection region in the image while ignores the selecting operation of the user in the non-detection region in the image.

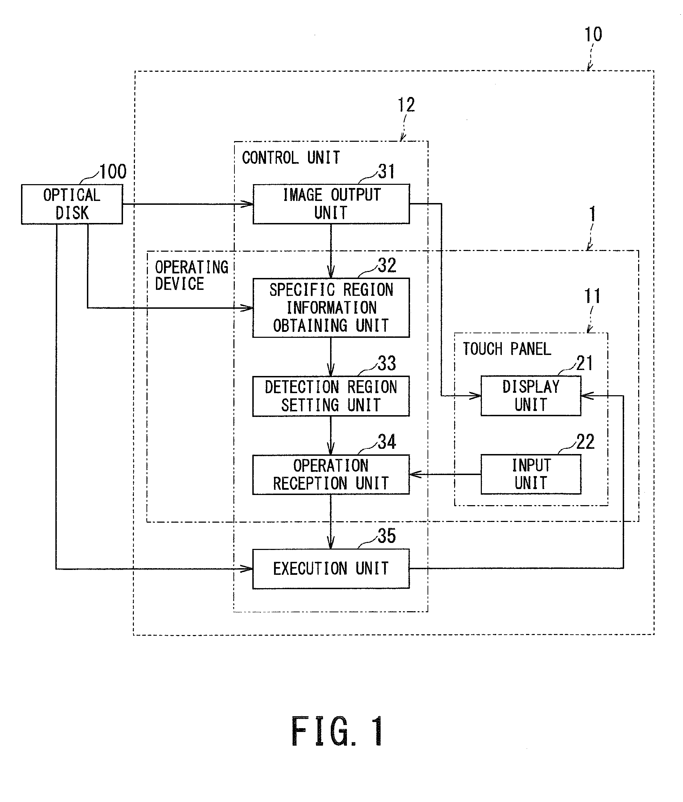

Fig. 1 is a block diagram illustrating an example of an optical disk playback device 10 including an operating device 1 according to an embodiment of the present invention.

The operating device 1 according to this embodiment is for receiving a selecting operation of a user of an image to be selected, recorded in an optical disk 100. As the optical disk 100, an optical disk conforming to a predetermined optical disk standard such as a DVD-movie standard can be used, for example.

The optical disk playback device 10 has a touch panel 11 and a control unit 12. The touch panel 11 has a display unit 21 and an input unit 22 constituted by a touch sensor provided in a vicinity of the display unit 21. The display unit 21 is constituted by a general display output device such as a liquid crystal display, an OLED (Organic Light Emitting Diode) display and the like, for example. The display unit 21 is controlled by the control unit 12 and displays at least alarm information for prompting a safe operation.

The input unit 22 gives information of a position instructed by the user on the touch sensor to the control unit 12. If the input unit 22 is constituted by an electrostatic capacitance panel of a projecting type, for example, it has an electrode row arranged longitudinally and laterally. In this case, the input unit 22 can obtain a contact position on the basis of an output change of the electrode row according to a change in the electrostatic capacitance in the vicinity of the contact position of a contact object.

If a user intends to perform an operation of pressing down one of soft keys on an image displayed on the display unit 21, for example, the user touches a portion corresponding to this soft key on the screen by a part of the body such as a finger. The input unit 22 obtains information of the contact position obtained from this contact operation as information of the position instructed by the user and gives it to the control unit 12.

The input unit 22 may be constituted by a hard key for directional instruction each in upper, lower, right, and left and a hard key for selection. In this case, the user operates the hard key for directional instruction so as to change a position of a pointer displayed on the display unit 21 and can give a selecting operation of an image to be selected, indicated by the pointer, to the control unit 12 by pressing down the hard key for selection. Moreover, if the optical disk playback device 10 is provided on a vehicle such as an automobile, for example, a steering remote control provided on a steering wheel may be used as the input unit 22.

The control unit 12 is constituted by a microcontroller, for example, including a CPU, a RAM, and a ROM. The CPU of the control unit 12 loads a detection region setting program stored in a storage medium such as the ROM and data required for execution of this program to the RAM. The CPU executes processing for reliably receiving a selecting operation of the image to be selected, desired by the user while reducing erroneous detection in accordance with the detection region setting program.

The RAM of the control unit 12 provides a work area for temporarily storing the program executed by the CPU and the data. A storage medium such as the ROM of the control unit 12 stores the detection region setting program and various types of data required for executing these programs.

The storage medium including the ROM has a configuration including a recording medium readable by the CPU such as a magnetic or optical recording medium or a semiconductor memory and the like. A part of or the whole of the programs and data in these storage mediums may be configured to be downloaded via an electronic network through a network connection unit, not shown.

In this case, the network connection unit implements various protocols for information communication according to a form of a network and connects the control unit 12 and other electric devices through an electronic network in accordance with the various protocols. For this connection, electric connection through the electronic network or the like can be applied. The electronic network, here, means an information communication network in general using a telecommunication technology and includes, other than a wireless/wired LAN (Local Area Network), the Internet network, a telephone communication line network, an optical fiber communication network, a cable communication network, a satellite communication network and the like.

As illustrated in Fig. 1, the CPU of the control unit 12 functions at least as an image output unit 31, a specific region information obtaining unit 32, a detection region setting unit 33, an operation reception unit 34, and an execution unit 35 by the detection region setting program. Each of these units 31 to 35 uses a required work area of the RAM as a temporary data storage area. These function realization s may be constituted by hardware logic such as a circuit without using the CPU.

The image output unit 31 obtains data of an image including a plurality of selection target images from the optical disk 100 and displays this image on the display unit 21. This type of images includes a menu image including a plurality of selection target images, for example. Explanation will be made below by using a movie menu image including a plurality of selection target images (links) for playback of a movie as this type of images.

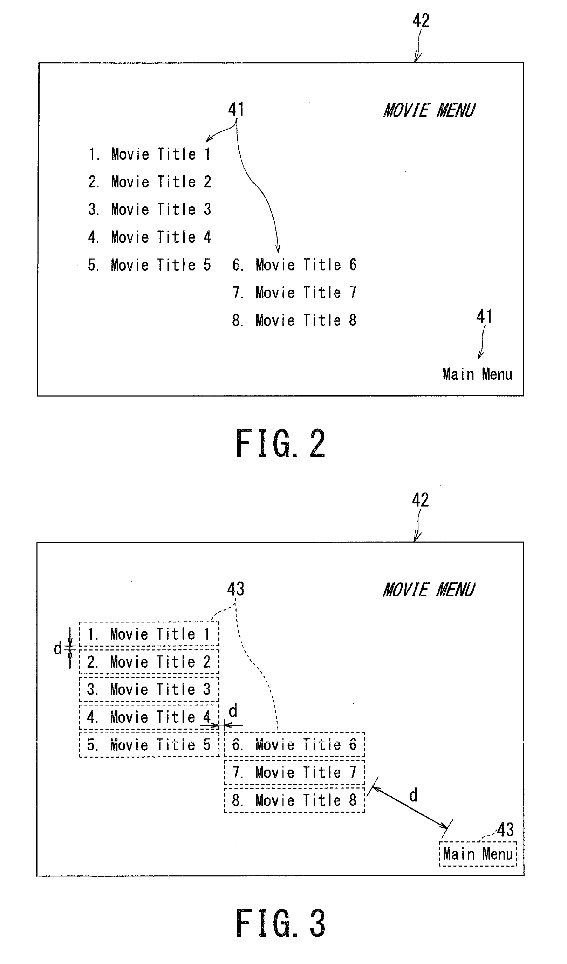

Fig. 2 is an explanatory view illustrating an example of a movie menu image 42 including a plurality of selection target images 41 (hereinafter referred to as images 41 to be selected). Fig. 2 illustrates an example when each of the images 41 to be selected is constituted by a character string but it may be constituted by figures such as a button.

In the plurality of images 41 to be selected, "1. Movie Title 1", for example, is associated with a playback operation of a movie of the Movie Title 1 recorded in the optical disk 100 in relation with a selecting operation of the user. Moreover, "Main Menu" is associated with a display operation of a Main menu image recorded in the optical disk 100 in relation with the selecting operation of the user.

Fig. 3 is a view for explaining a specific region 43 recorded in the optical disk 100.

The specific region information obtaining unit 32 obtains information of the specific region 43 recorded in the memory, such as a magnetic or optical recording medium including optical disk 100 or a semiconductor memory and the like, for each of the images 41 to be selected. In the description to follow, a case where the memory is the optical disk will be illustrated as an example. Each of the images 41 to be selected has the respective corresponding specific region 43. Information of this specific region 43 is recorded in the optical disk 100 in advance in association with information of the image 41 to be selected.

In general, the specific region 43 is handled as a detection region for receiving the selecting operation of the user to each of the images 41 to be selected. However, when the specific region 43 is to be handled as the detection region, if the specific regions 43 are close to each other and a distance d between them is small, the selecting operation of an image 41 to be selected not intended by the user might be erroneously detected.

In an example illustrated in Fig. 3, if the user touches an image 41 to be selected corresponding to the Movie Title 2 even though playback of the movie of the Movie Title 3 is intended, for example, playback of the Movie Title 2 is started. In this case, a so-called recovery operation for stopping playback of the movie and displaying the movie menu image 42 again takes a labor. Moreover, system-busy occurs during waiting time from reading-in of the movie to playback, and even the recovery operation cannot be received in some cases.

Moreover, in the example illustrated in Fig. 3, if the user performs the selecting operation of the "Main Menu" with an intention of displaying the Main menu image, since the specific region 43 of the "Main Menu" is small, it is likely that the selecting operation fails.

Thus, the detection region setting unit 33 of the operating device 1 according to this embodiment sets a detection region and a non-detection region of each of the images 41 to be selected in accordance with the distance d between the specific regions 43 close to each other instead of uniform setting of the specific region 43 as the detection region. As a result, a labor taken for the recovery operation is prevented by reducing erroneous detection of the selecting operation as much as possible, while the selecting operation of the image 41 to be selected, desired by the user can be reliably received, which will be described below in detail.

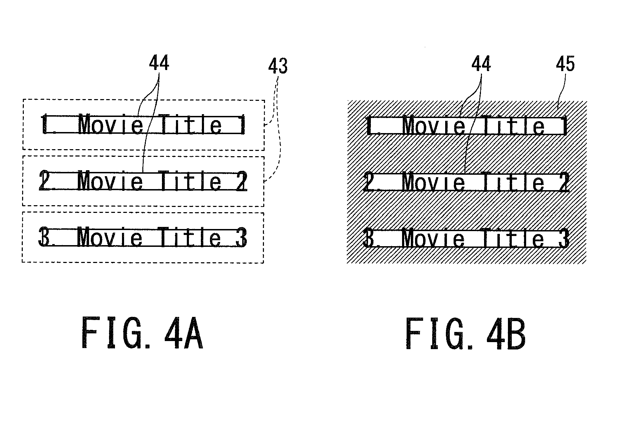

Fig. 4A is an explanatory view illustrating an example of a relation between a detection region 44 and the specific region 43 according to this embodiment, and Fig. 4B is an explanatory view illustrating an example of a relation between a non-detection region 45 and the detection region 44 according to this embodiment.

The detection region setting unit 33 sets the detection region 44 and the non-detection region 45 of each of the image 41 to be selected in accordance with the distance d between the specific regions 43 close to each other.

Specifically, the detection region setting unit 33 sets a region with a width reduced at least in an approaching direction (adjacent direction) for at least one of the plurality of specific regions 43 close to each other as the detection region 44 of each of the selection target images for the image 41 to be selected with the distance d between the specific regions 43 less than a first predetermined (threshold) distance Dt1. Moreover, the detection region setting unit 33 sets a region between these detection regions 44 so set in the approaching direction (adjacent direction) as the non-detection region 45. A width of the non-detection region 45 in the approaching direction may be set so as to be a predetermined distance not less than the first predetermined distance Dt1.

Fig. 4A illustrates an example in which a region of each of the plurality of specific regions 43 close to each other is isotropically reduced at a same rate (80%, for example) is set as the detection region 44. When Fig. 3 and Fig. 4B are compared with each other, it is known that the distance between the detection regions 44 set by the detection region setting unit 33 is larger than the distance between the specific regions 43. Moreover, a region between the detection regions 44 is set as the non-detection region 45.

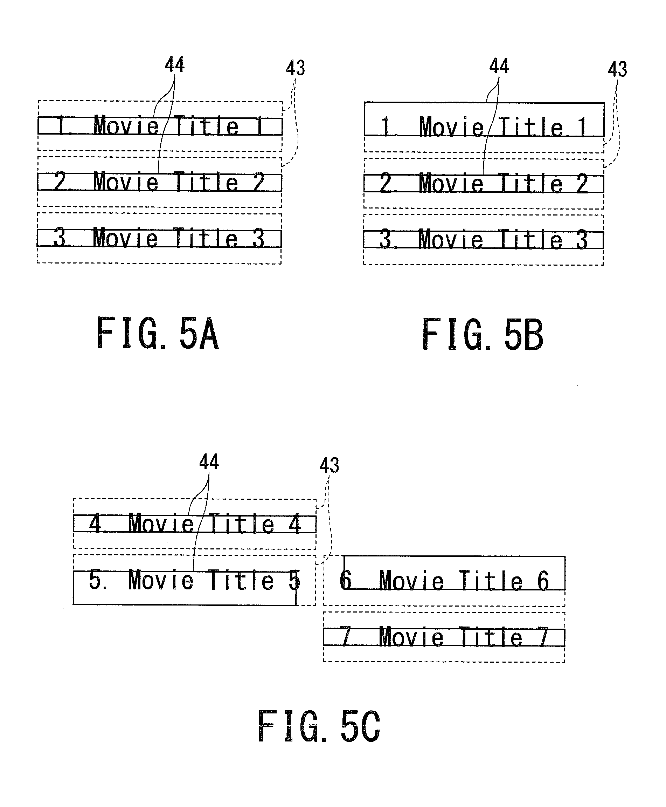

Fig. 5A is an explanatory view illustrating an example in which a region width in a direction orthogonal to the approaching direction is maintained and the detection region 44 is set from the specific region 43. Fig. 5B is an explanatory view illustrating an example in which a position of an edge portion (an upper side of "1. Movie Title 1" in the figure) of the specific region 43 without the specific region 43 close to itself is maintained and the detection region 44 is set in the example illustrated in Fig. 5A. Fig. 5C is an explanatory view illustrating an example in which the detection regions 44 are set from the specific regions 43 (see "5. Movie Title 5" and "6. Movie Title 6" in the figure) having a plurality of approaching directions in the example illustrated in Fig. 5B.

In Figs. 5A to 5C, the non-detection regions 45 are not shown, but the detection region setting unit 33 sets at least a region between the detection regions 44 as the non-detection region 45.

Moreover, a setting method of the detection region 44 and the non-detection region 45 is not limited to the examples illustrated in Fig. 4 and Figs. 5A to 5C. Furthermore, a shape of the detection region 44 does not have to be rectangular.

Moreover, if there is the image 41 to be selected without any other close specific regions 43 within a second predetermined (threshold) distance Dt2 larger than the first predetermined distance Dt1, the detection region setting unit 33 enlarges a width of the specific region 43 in a direction where other specific regions 43 are not present and sets it as the detection region 44.

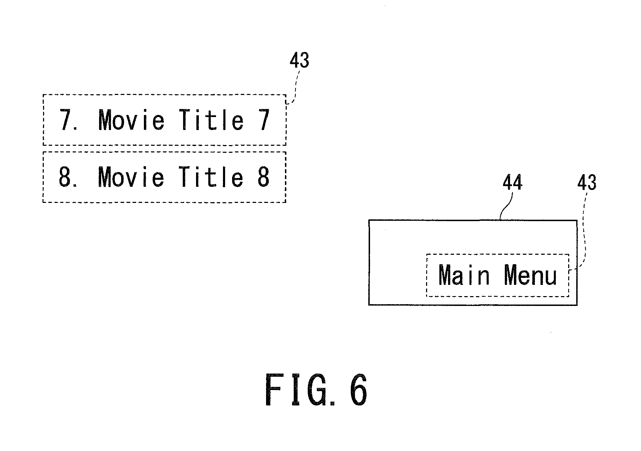

Fig. 6 is an explanatory view illustrating an example of a state in which the width of the specific region 43 is enlarged, and the detection region 44 is set.

By setting the detection region 44 as a region obtained by enlarging the specific region 43, the user can easily select the image 41 to be selected corresponding to the detection region 44.

Moreover, regarding other images 41 to be selected, the detection region setting unit 33 sets the specific region 43 and the detection region 44 as the same region.

The detection region setting unit 33 may set the specific region 43 and the detection region 44 as same regions when an area of the specific region 43 is larger than a predetermined area even if there is no other close specific regions 43 within the second predetermined distance Dt2.

When the detection region 44 is not to be displayed as an image, there is a concern that the user feels discomfort if the image 41 to be selected (a character string, for example) is largely shifted from the detection region 44. Thus, it is preferable that the detection region setting unit 33 sets the detection region 44 so as to include a center position of the specific region 43, for example.

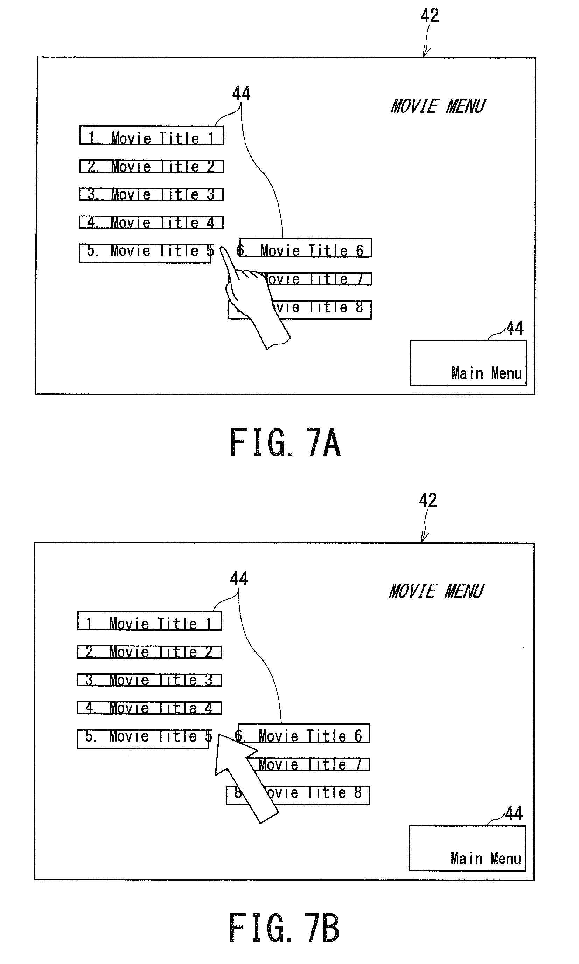

Fig. 7A is an explanatory view illustrating an example of the movie menu image 42 when the detection region 44 is set by applying the method illustrated in Figs. 5C and 6 to the specific region 43 illustrated in Fig. 3. Fig. 7B is an explanatory view illustrating an example when an input operation through a pointer image is performed to the movie menu image 42 illustrated in Fig. 7A. Illustration of the non-detection region 45 is omitted both in Figs. 7A and 7B, but the detection region setting unit 33 sets at least a region between the detection regions 44 as the non-detection region 45.

As is obvious from comparison between Fig. 3 and Figs. 7, the distance between the detection regions 44 set by the detection region setting unit 33 can be taken larger than the distance between the specific regions 43. Moreover, the region between the detection regions 44 is set as the non-detection region 45. Thus, the selecting operation of the user can be reliably received according to his/her intention while probability of erroneous detection is largely reduced. Moreover, regarding the image 41 to be selected without any other close specific regions 43 within the second predetermined distance Dt2, the region obtained by enlarging the width of the specific region 43 is set as the detection region 44. Thus, the user can easily select also the image 41 to be selected with a small area.

The operation reception unit 34 receives the selecting operation of the user in the detection region 44 within the movie menu image 42 while it ignores the selecting operation of the user in the non-detection region 45 within the movie menu image 42.

When the selecting operation of the user in the detection region 44 within the movie menu image 42 is received, the execution unit 35 reads out information required for an operation associated with the selecting operation of the image 41 to be selected corresponding to this detection region 44 from the memory like optical disk 100. Then, the execution unit 35 executes the operation associated with the selecting operation of the image 41 to be selected by using the information read out of the optical disk 100.

For example, the selecting operation of the user performed in the detection region 44 of "1. Movie Title 1" is received, the execution unit 35 reads out the information (movie data of Movie Title 1) required for a playback operation of the movie of the Movie Title 1 associated with the selecting operation applied to the "1. Movie Title 1" from the optical disk 100 and starts playing the movie of the Movie Title 1.

Subsequently, an example of operations of the operating device and the optical disk playback device according to this embodiment will be described.

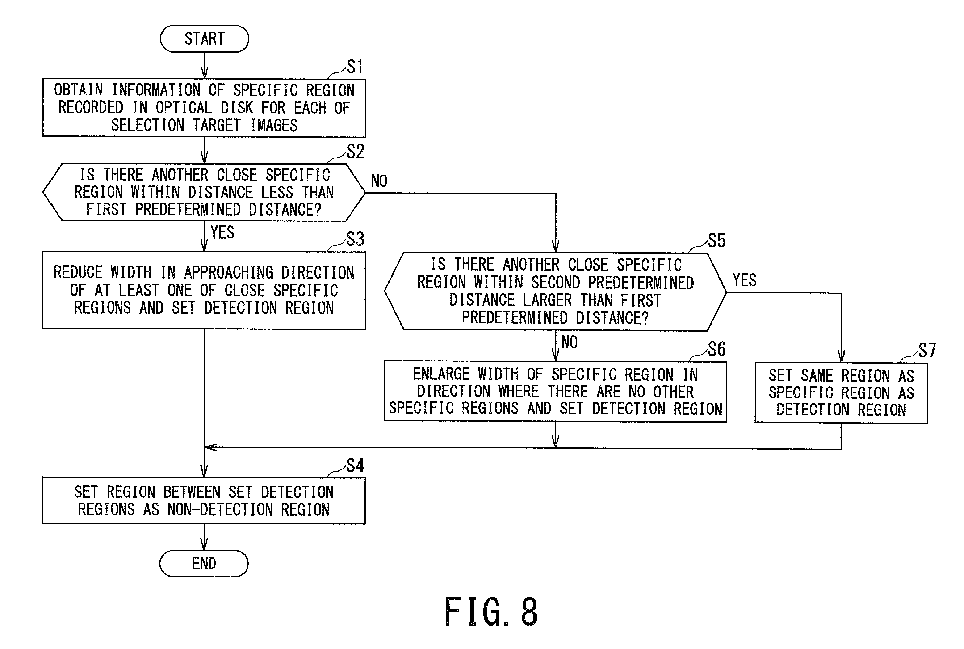

Fig. 8 is a flowchart illustrating an example of a procedure of the operating device 1 illustrated in Fig. 1 for setting the detection region 44 and the non-detection region 45 so that the selecting operation of the image 41 to be selected, desired by the user can be reliably received while erroneous detection is reduced. In Fig. 8, reference characters composed of the character S and numerals indicate steps in the flowchart.

This procedure starts when the image output unit 31 obtains data of the movie menu image 42 including the plurality of images 41 to be selected from the optical disk 100 and has this image displayed on the display unit 21.

First, at Step S1, the specific region information obtaining unit 32 obtains information of the specific region 43 recorded in the optical disk 100 for each of the images 41 to be selected.

Subsequently, at Step S2, the detection region setting unit 33 determines whether or not there is another close specific region 43 within a distance less than the first predetermined distance Dt1 for the specific region 43 obtained at Step S1.

If there is another close specific region 43 within the distance less than the first predetermined distance Dt1 (YES at Step S2), a region with a width reduced at least in the approaching direction (adjacent direction) for at least one of the plurality of close specific regions 43 is set as the detection region 44 of each of the selection target images (Step S3). Moreover, the detection region setting unit 33 sets a region in the approaching direction between the set detection regions 44 as the non-detection region 45 (Step S4).

When there is no other close specific regions 43 within a distance less than the first predetermined distance Dt1 (NO at Step S2), the detection region setting unit 33 determines whether or not there is another close specific region 43 within the second predetermined distance Dt2 larger than the first predetermined distance Dt1 for the specific region 43 obtained at Step S1.

If there is no other close specific regions 43 within the second predetermined distance Dt2 (NO at Step S5), the width of the specific region 43 is enlarged in the direction where other specific regions 43 are not present and set as the detection region 44 (Step S6). Moreover, the detection region setting unit 33 sets a region in the approaching direction between the set detection regions 44 as the non-detection region 45 (Step S4).

When there is another close specific region 43 within the second predetermined distance Dt2 (YES at Step S5), the detection region setting unit 33 sets the specific region 43 and the detection region 44 as the same regions (Step S7), and sets the region in the approaching direction between the set detection regions 44 as the non-detection region 45 (Step S4).

By executing all Steps S1 to S7 for all the specific regions 43, the detection region 44 can be set and the non-detection region 45 can be set for all the images 41 to be selected.

By means of the above-described procedure, the detection region 44 and the non-detection region 45 can be set so that the selecting operation of the image 41 to be selected desired by the user can be received reliably while erroneous detection is reduced. The image output unit 31 may display the movie menu image 42 on the display unit 21 after a series of the procedures illustrated in Fig. 8 is finished.

The operating device 1 and the optical disk playback device 10 according to this embodiment can enlarge an interval between the detection regions 44 and set it as the non-detection region 45 if the specific regions 43 are close to each other. Thus, the selecting operation of the user can be reliably received in accordance with his/her intension while probability of erroneous detection is largely reduced. By largely reducing the probability of erroneous detection, the user can save a labor of performing a recovery operation from unintended transition, which is very convenient.

Moreover, the operating device 1 and the optical disk playback device 10 can enlarge the detection region 44 if the specific region 43 is isolated. Thus, the user can easily perform the selecting operation to the isolated small image 41 to be selected.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An operating device for receiving a selecting operation of a user of an image including a plurality of selection target images, the image being read from an optical disk, comprising:
a specific region information obtaining unit configured to obtain information of a specific region recorded in the optical disk for each of the plurality of selection target images;
a detection region setting unit configured to set a detection region for receiving the selection operation to a selection target image for each of the plurality of selection target images based on the information of the specific region such that, for selection target images with specific regions of which are close to each other with an interval less than a first threshold distance, a region with a width reduced in an approaching direction at least for one of a plurality of close specific regions is set as a detection region of corresponding selection target image and a region in the approaching direction between set detection regions is set as a non-detection region, while for other selection target images a same region as the specific region is set as the detection region; and
an operation reception unit configured to receive the selecting operation of the user in the detection region in the image while ignoring the selecting operation of the user in the non-detection region in the image.

2. The device according to claim 1, wherein
the detection region setting unit sets the detection region by reducing the width in the approaching direction for at least either one of the plurality of specific regions which are close to each other so as to have the non-detection region with a predetermined distance not less than the first predetermined distance.

3. The device according to claim 1 or 2, wherein
the detection region setting unit sets the detection region so as to include a center position of the specific region.

4. The device according to any one of claims 1 to 3, wherein
for selection target image of the other selection target images with specific region of which has no other specific regions within a second threshold distance larger than the first threshold distance, the detection region setting unit sets the detection region by enlarging the width of the specific region in a direction where the other specific regions are not present within the second threshold distance.

5. The device according to any one of claims 1 to 4, further comprising:
a touch panel having an input device for receiving the selecting operation of the user in the detection region and a display for displaying the image.

6. An optical disk playback device comprising:
an image output unit configured to obtain data of an image including a plurality of selection target images from an optical disk and for displaying the image on a display;
a specific region information obtaining unit configured to obtain information of a specific region recorded in the optical disk for each of the plurality of selection target images;
a detection region setting unit configured to set a detection region for receiving the selection operation to a selection target image for each of the plurality of selection target images based on the information of the specific region such that, for selection target images with specific regions of which are close to each other with an interval less than a first threshold distance, a region with a width reduced in an approaching direction at least for one of a plurality of close specific regions is set as a detection region of corresponding selection target image and a region in the approaching direction between set detection regions is set as a non-detection region, while for other selection target images a same region as the specific region is set as the detection region;
an operation reception unit configured to receive the selecting operation of the user in the detection region in the image while ignoring the selecting operation of the user in the non-detection region in the image; and
an execution unit configured to, when the selecting operation of the user in the detection region in the image is received, read out information required for an operation associated with the selecting operation of the selection target image corresponding to selected detection region from the optical disk and execute the operation associated with the selecting operation.

7. An operating device for receiving a selecting operation of a user of an image including a plurality of selection target images, the image being read from a memory, comprising:
a specific region information obtaining unit configured to obtain information of a specific region recorded in the memory for each of the plurality of selection target images;
a detection region setting unit configured to set a detection region for receiving the selection operation to a selection target image for each of the plurality of selection target images based on the information of the specific region such that, for selection target images with specific regions of which are close to each other with an interval less than a first threshold distance, a region with a width reduced in an approaching direction at least for one of a plurality of close specific regions is set as a detection region of corresponding selection target image and a region in the approaching direction between set detection regions is set as a non-detection region, while for other selection target images a same region as the specific region is set as the detection region; and
an operation reception unit configured to receive the selecting operation of the user in the detection region in the image while ignoring the selecting operation of the user in the non-detection region in the image.

8. An operating method for receiving a selecting operation of a user of an image including a plurality of selection target images, the image being read from a memory, comprising:
obtaining information of a specific region recorded in the memory for each of the plurality of selection target images;
setting a detection region for receiving the selection operation to a selection target image for each of the plurality of selection target images based on the information of the specific region such that, for selection target images with specific regions of which are close to each other with an interval less than a first threshold distance, a region with a width reduced in an approaching direction at least for one of a plurality of close specific regions is set as a detection region of corresponding selection target image and a region in the approaching direction between set detection regions is set as a non-detection region, while for other selection target images a same region as the specific region is set as the detection region; and
receiving the selecting operation of the user in the detection region in the image while ignoring the selecting operation of the user in the non-detection region in the image.
